# EUROPÄISCHE PATENTSCHRIFT

(11) **EP 3 607 641 B1**
(45) Veröffentlichungstag und Bekanntmachung des Hinweises auf die Patenterteilung: **07.06.2023**
(21) Anmeldenummer: 18723709.4
(22) Anmeldetag: 06.04.2018
(51) Int. Cl.: H02K 7/116, H02K 7/10

(54) **STELLANTRIEB MIT BREMSVORRICHTUNG**
ACTUATOR WITH BRAKING DEVICE
ACTIONNEUR POURVU DE DISPOSITIF DE FREINAGE

(30) Priorität: 07.04.2017 DE 102017107519
(43) Veröffentlichungstag der Anmeldung: 12.02.2020
(73) Patentinhaber: AUMA Riester GmbH & Co. KG, 79379 Müllheim (DE)
(72) Erfinder: HOFMANN, Benjamin, 79423 Heitersheim (DE); HOFMANN, Robert, 83627 Warngau (DE); BACHERT, Rudolf, 74937 Spechbach (DE)
(74) Vertreter: Mertzlufft-Paufler, Cornelius
(86) Internationale Anmeldenummer: PCT/EP2018/058863
(87) Internationale Veröffentlichungsnummer: WO 2018/185287

(56) Entgegenhaltungen:
- WO-A2-2017/001052
- DE-A1- 19 519 638
- DE-C1- 19 935 196
- DE-U1-202015 008 215
- JP-A- 2007 040 067
- JP-B2- 3 919 872
- US-A- 5 195 721
- US-A1- 2002 108 747
- US-B1- 6 488 260
- GETRIEBEBAU NORD: "Getriebemotoren mit eingebauter Fliehkraftbremse", KATALOG GETRIEBEBAU NORD, XX, XX, 1. Januar 1989 (1989-01-01), Seite I,314, XP003000074,

## Beschreibung

Die Erfindung betrifft einen Stellantrieb mit einem Elektromotor, welcher mittels eines Getriebes eine Abtriebswelle antreibt, wobei die Abtriebswelle mit einem Stellelement koppelbar oder gekoppelt ist.

Die Erfindung betrifft ferner ein Bremsmodul, welches beispielsweise zwischen einem Elektromotor und einem Getriebe eines solchen Stellantriebs anordenbar ist.

Derartige Stellantriebe sind bekannt und werden beispielsweise eingesetzt, um Stellelemente wie Schützen, also Falltore zum Absperren und Aufstauen von Wasserläufen oder Schleusen, zu betätigen.

Beim Antrieb von Schützen ist es üblich, den Stellantrieb selbsthemmend auszubilden, um zu verhindern, dass die Schütze im Falle eines Stromausfalls selbsttätig zufällt. In gewissen Anwendungen ist es dagegen erwünscht, dass die Schütze bei einem Stromausfall oder einem sonstigen Ausfall des Stellantriebs kontrolliert aufgrund Ihres Eigengewichts zufallen kann, bevorzugt mit einer konstanten Fallgeschwindigkeit (sogenannter "fail safe mode"). Beispielhafte Werte für einen derartigen Freifallbetrieb einer Schütze sind eine Fallgeschwindigkeit von ca. 5 cm/sec sowie ein dazu erforderliches Bremsmoment von etwa 17 Nm.

Zum Zwecke eines sicheren Freifallbetriebs von Schützen war es bisher üblich, hydraulische Antriebe einzusetzen, bei denen ein kontrolliertes Zufallen der Schütze bei einem Stromausfall einfach realisierbar ist. Solche Antriebe haben aber eigene Probleme, beispielsweise die Gefahr der Kontamination von Gewässern durch das Hydrauliköl.

Als Stand der Technik sind elektromotorische Antriebe mit Bremsvorrichtungen insbesondere aus US 6 488 260 B1, US 2002 108747A1, DE 199 35 196 C1 sowie aus In GETRIEBEBAU NORD: 'Getriebemotoren mit eingebauter Fliehkraftbremse", KATALOG GETRIEBEBAU NORD, XX, XX, 1. Januar 1989 (1989-01-01), Seite 1, 314, XP003000074 bekannt. Hierbei sind die Bremsvorrichtungen teilweise als Fliehkraft- und damit Verzögerungsbremsen oder auch als Haltebremsen ausgestaltet. Ferner sind auch elektromotorische Antriebe mit elektromagnetischen Bremsen sowie Rotationsfederspeichern bekannt, siehe etwa die DE 19519 638 A1.

Die beiden Druckschriften JP 2007 040067 A und JP 3 919872 B2 offenbaren ebenfalls jeweils einen Stellantrieb mit einer Bremsvorrichtung, die zwischen einem Antriebsmotor und einem zugeordneten Getriebe angeordnet ist. Hierbei ist der Stellantrieb von JP 2007 040067 A zum Verstellen und Halten von schweren Körpern wie Wasserschleusentoren ausgelegt, während derjenige von JP 3 919872 B2 für den Einsatz in einem Atomkraftwerk ausgelegt ist und daher über eine magnetische Kupplung verfügt, um so sicher Kontrollstäbe eines Reaktors verstellen zu können.

Aus DE 20 2015 00821 5 U1 ist zudem eine Kontaktierungsvorrichtung, die Vorgaben des Explosionsschutzes erfüllt, bekannt.

Der Erfindung liegt die Aufgabe zugrunde, eine Alternative zu hydraulischen Antrieben bereitzustellen, wobei die Alternativlösung in einem Störfall ein kontrolliertes selbsttätiges Verstellen des Stellantriebs, z.B. einen Freifallbetrieb wie zuvor beschrieben, ermöglichen und somit eine hohe Sicherheit im Betrieb gewährleisten soll.

Zur Lösung dieser Aufgabe sind erfindungsgemäß bei einem Stellantrieb die Merkmale von Anspruch 1 vorgesehen. Somit wird erfindungsgemäß zur Lösung der Aufgabe bei einem Stellantrieb der eingangs genannten Art vorgeschlagen, dass der Stellantrieb eine Verzögerungsbremse aufweist, die dazu eingerichtet ist, eine Bremskraft auf das Stellelement auszuüben und dass der Stellantrieb eine Haltevorrichtung aufweist, die dazu eingerichtet ist, eine Haltekraft auf das Stellelement auszuüben. Die Kombination aus Verzögerungsbremse und Haltevorrichtung bildet dabei eine erfindungsgemäße Bremsvorrichtung. Ferner sind die Verzögerungsbremse und die Haltevorrichtung als ein Bremsmodul ausgebildet mit dem ein Drehmoment von dem Elektromotor auf das Getriebe übertragbar ist, wobei die Verzögerungsbremse und die Haltevorrichtung mit einem gemeinsamen Gehäuse ausgebildet sind und wobei das Bremsmodul in eine Schnittstelle zwischen dem Elektromotor und dem Getriebe einsetzbar ist oder eingesetzt ist.

Hierbei kann unter einer Verzögerungsbremse insbesondere eine Bremse verstanden werden, die eine Bremskraft entwickelt, welche von einer Geschwindigkeit, insbesondere einer Drehgeschwindigkeit oder Drehzahl, eines mit der Verzögerungsbremse abzubremsenden mechanischen Teils abhängt.

Für die Verzögerungsbremse, also insbesondere für eine Fliehkraftbremse, wird es dabei als vorteilhaft angesehen, wenn diese so eingerichtet ist, dass sie die Bremskraft vermittelt durch das Getriebe ausübt. Denn in einem solchen Fall ist typischerweise die Drehzahl vor dem Getriebe, also an der Stelle der Verzögerungsbremse, höher als nach dem Getriebe. Dies ist vorteilhaft, da Verzögerungsbremsen, insbesondere Fliehkraftbremsen, typischerweise bei hohen Drehzahlen große Kräfte ausüben können.

Analog gilt auch für die Haltevorrichtung, dass es vorteilhaft ist, wenn diese so eingerichtet ist, dass sie die Haltekraft vermittelt durch das Getriebe ausübt. Denn in beiden Fällen wirkt sich das Getriebe vorteilhaft aus, da die Halte- bzw. Bremskräfte geringer ausfallen können als wenn die Verzögerungsbremse beziehungsweise die Haltevorrichtung direkt auf das Stellelement wirken. Zudem ist an der Stelle des Stellelements oftmals kein Platz für derartige Bremsvorrichtungen vorhanden. Mit anderen Worten müssen gemäß der Erfindung sowohl die Verzögerungsbremse als auch die Haltevorrichtung nicht direkt auf das Stellelement wirken; vielmehr ist es vorteilhaft, wenn die Verzögerungsbremse und/oder die Haltevorrichtung auf Teile eines Antriebsstrangs wirken, der das Stellelement antreibt.

Bei einem erfindungsgemäßen Stellantrieb können somit, beispielsweise zwischen dem Elektromotor und der Abtriebswelle, eine Haltevorrichtung und eine Verzögerungsbremse angeordnet sein, die beide jeweils so eingerichtet sind, dass durch Einwirkung der Haltevorrichtung/Verzögerungsbremse Halte-/ Bremskräfte auf eine Abtriebswelle und damit auf das Stellelement ausgeübt werden können. Vom Stellelement aus gesehen sind die Haltevorrichtung und die Verzögerungsbremse gemäß der Erfindung dabei bevorzugt jenseits des Getriebes angeordnet.

Ein erfindungsgemäßer Stellantrieb mit den Merkmalen des Anspruchs 1 hat den Vorteil, dass bei stromlosem Zustand des Elektromotors ein unkontrolliert schnelles Verfahren des Stellelements, beispielsweise das Zufallen einer mittels des Stellantriebs verfahrenen Schütze, durch die Verzögerungsbremse wirksam verhindert werden kann. Hierzu ist die Einwirkung der Verzögerungsbremse, zum Beispiel auf eine Eingangswelle des Getriebes, gemäß der Erfindung bevorzugt so ausgestaltet, dass sich in einem stromlosen Zustand des Elektromotors eine konstante Verfahrgeschwindigkeit des von dem Stellantrieb verstellten Stellelements, also beispielsweise einer Schütze, ergibt.

Es versteht sich, dass die für eine selbsttätige Verstellbewegung des Stellelements notwendige Antriebskraft beispielsweise durch eine Gewichtskraft des Stellelements oder eine sonstige auf das Stellelement einwirkende Kraft, beispielsweise eine Wasserkraft, gegeben sein kann.

Ein erfindungsgemäßer Stellantrieb mit den Merkmalen des Anspruchs 1 hat ferner den Vorteil, dass durch Einwirkung der Haltevorrichtung, beispielsweise auf die Eingangswelle des Getriebes, eine Haltekraft auf das Stellelement ausgeübt werden kann. Damit lässt sich eine ungewollte Verstellung des Stellelements verhindern. Mit der Haltevorrichtung kann somit, je nach Auslegung in bestromten oder unbestromten Zustand, das Stellelement in einer gewünschten Position gehalten werden, ohne dass der Elektromotor hierzu eingesetzt werden muss.

Erfindungsgemäß kann die Aufgabe auch durch weitere vorteilhafte Ausführungen der Unteransprüche gelöst werden.

Beispielsweise kann gemäß einer Ausgestaltung der Erfindung vorgesehen sein, dass die Verzögerungsbremse als eine Fliehkraftbremse ausgestaltet ist.

Die Verwendung speziell einer Fliehkraftbremse hat gegenüber anderen Verzögerungsbremsen wie zum Beispiel Wirbelstrombremsen den Vorteil, dass Fliehkraftbremsen vergleichsweise preisgünstig sind und auch bei hohen Bremstemperaturen sicher eingesetzt werden können. Zudem ist eine Schaltdrehzahl, ab der die Bremse eingreift, sehr leicht einstellbar, beispielsweise durch entsprechende mechanische Auslegung einer Feder der Fliehkraftbremse. Somit lassen sich bei einer Fliehkraftbremse verschiedene Schaltdrehzahlen mittels verschiedener Federn vergleichsweise einfach realisieren. Die Fliehkraftbremse hat zudem den Vorteil, dass eine definierte Schaltdrehzahl überhaupt vorgebbar ist: Unterhalb der Schaltdrehzahl ist die Fliehkraftbremse inaktiv und bewirkt lediglich eine Vergrößerung des Trägheitsmomentes des Stellantriebs. Vorteilhaft ist ferner, dass sich Fliehkraftbremsen, beispielsweise im Vergleich zu Wirbelstrombremsen, durch einen einfachen mechanischen Aufbau auszeichnen und sich zudem im Praxis-Betrieb bewährt haben.

Eine weitere bevorzugte Ausgestaltung der Erfindung sieht vor, dass die Haltevorrichtung elektrisch betätigbar ausgestaltet ist. Denn damit lässt sich eine Fernsteuerung des Stellantriebs, insbesondere ein ferngesteuertes Festhalten des Stellelements, besonders einfach realisieren.

Eine andere Ausgestaltung der Erfindung sieht vor, dass die Haltevorrichtung so eingerichtet ist, dass sie zwei verschiedenen Antriebsrichtungen entgegenwirkt. Durch diese Ausgestaltung kann ein Stellelement besonders sicher in seiner Position durch die Haltevorrichtung gehalten werden, da diese aus verschiedenen Richtungen wirkende Verstellkräfte aufnehmen kann.

Gemäß einer wiederum anderen Ausgestaltung der Erfindung kann die Haltevorrichtung gerade so eingerichtet sein, dass sie die Bremskraft im bestromten Zustand ausübt. Bei dieser Ausgestaltung kann die Haltevorrichtung also insbesondere so eingerichtet sein, dass sie im unbestromten Zustand keine Bremskraft ausübt. Diese spezifische Ausgestaltung ist beispielsweise dann vorteilhaft, wenn die Haltevorrichtung die Position des Stellelements im Falle eines Stromausfalls nicht sichern sondern gerade freigeben soll, beispielsweise weil für diesen Fall das Stellelement, gebremst durch die Verzögerungsbremse, selbsttätig verfahren soll. Ein solches Szenario wäre beispielsweise bei einem Schütze gegeben, dass im Normalbetrieb, also in bestromten Zustand, von der Haltevorrichtung offen (also oben) gehalten wird, während es bei Stromausfall in einem sicheren Freifallbetrieb nach unten verfährt und somit schließt.

Eine weitere bevorzugte Ausgestaltung der Erfindung sieht vor, dass die Verzögerungsbremse und/oder die Haltevorrichtung zur Einwirkung auf eine Eingangswelle des Getriebes eingerichtet ist/sind. Um eine besonders kompakte Bauweise des Stellantriebs zu ermöglichen, kann es hierbei vorteilhaft sein, wenn die Verzögerungsbremse und/oder die Haltevorrichtung zwischen Elektromotor und Getriebe angeordnet ist/sind.

Durch das erfindungsgemäße Vorsehen einer Haltevorrichtung kann insbesondere auf ein selbsthemmendes Getriebe verzichtet werden, das im Stand der Technik oft eingesetzt wird, um ein selbsttätiges Verstellen des Stellelements zu verhindern. Denn mittels der Haltevorrichtung kann im Normalbetrieb ein selbsttätiges Verstellen des Stellelements, beispielsweise das Zufallen einer von dem Stellantrieb betriebenen Schütze, wirksam ausgeschlossen werden.

Folglich sieht eine bevorzugte Ausgestaltung der Erfindung vor, dass das Getriebe des Stellantriebs keine Selbsthemmung aufweist beziehungsweise nicht selbsthemmend ausgebildet ist. Mit anderen Worten sieht diese Ausgestaltung vor, dass das Getriebe in zwei entgegengesetzte Richtungen antreibbar ist. Eine solche Ausgestaltung kann beispielsweise durch ein Schneckengetriebe, bei dem die Schneckenwelle eine entsprechende Steigung hat und/oder mehrgängig ausgebildet ist, realisiert sein. Erfindungsgemäß können aber zum gleichen Zweck auch Stirnrad-, Kegelrad- oder andere Verzahnungen eingesetzt werden. Insbesondere kann als ein erfindungsgemäßes, nichtselbsthemmendes Getriebe ein wenigstens zweigängiges Schneckengetriebe eingesetzt werden. Nicht-selbsthemmende Getriebe weisen typischerweise einen höheren Wirkungsgrad als vergleichbare, selbsthemmende Getriebe auf. Aufgrund des verbesserten Wirkungsgrades können daher durch die Erfindung kleine Elektromotoren mit geringerer Leistung als im Stand der Technik für derartige Stellantriebe üblich eingesetzt werden. Dies ist vorteilhaft, um die Größe sowie den Preis des Stellantriebs zu reduzieren.

Gemäß einer weiteren Ausgestaltung der Erfindung kann die Haltevorrichtung als elektromagnetische Haltebremse ausgestaltet sein. Von Vorteil ist dabei, dass hohe Haltekräfte erzeugbar sind.

Eine weitere erfindungsgemäße Ausgestaltung sieht vor, dass die Haltevorrichtung eine, vorzugsweise elektrisch betätigbare, Kupplung und eine Lastmomentsperre aufweist. Während dabei die elektrische betätigbare Kupplung beispielsweise als eine elektromagnetische Kupplung vorliegen kann, kann die Lastmomentsperre beispielsweise mit einem Handrad des Stellantriebs verbunden sein. Durch diese Ausgestaltungen lässt sich eine erfindungsgemäße Haltevorrichtung mit geringem Bauaufwand erzielen. Die Ausgestaltung der Kupplung als elektrisch betätigbar ermöglicht eine einfache Fernbedienung der Haltevorrichtung.

Gemäß einer wiederum anderen Ausgestaltung der Erfindung ist es besonders günstig, wenn die Verzögerungsbremse als Fliehkraftbremse ausgestaltet ist. Hierbei kann die Fliehkraftbremse vorzugsweise so eingerichtet beziehungsweise dimensioniert sein, dass eine Bremswirkung erst oberhalb der anderthalbfachen, bevorzugt oberhalb der doppelten, Nenndrehzahl des Elektromotors erreicht wird. Die Nenndrehzahl kann beispielsweise durch eine im Normalbetrieb durchschnittlich verwendete Drehzahl des Elektromotors gegeben sein oder durch eine Drehzahl bei der eine vom Elektromotor abgegebene Leistung ein Maximum annimmt. Von Vorteil ist bei dieser Ausgestaltung, dass der Elektromotor des Stellantriebs im Normalbetrieb die Fliehkraftbremse gerade nicht überwinden muss, da im Normalbetrieb keine Drehzahlen auftreten, bei der eine Bremswirkung mit der Fliehkraftbremse bereits erzielt wird.

Ferner kann, wie bereits zuvor erläutert, die Verzögerungsbremse gemäß einer Ausgestaltung der Erfindung so eingerichtet sein, dass im Falle eines selbsttätigen Verstellens des Stellelements mittels der Verzögerungsbremse eine konstante und/oder maximale Verstellgeschwindigkeit gewährleistbar ist.

Eine weitere, besonders bevorzugte Ausgestaltung der Erfindung sieht vor, dass die Verzögerungsbremse und/oder die Haltevorrichtung als ein Bremsmodul, bevorzugt mit einem gemeinsamen Gehäuse, ausgebildet sind. Das Bremsmodul kann dabei so ausgestaltet sein, dass es in eine Schnittstelle zwischen dem Elektromotor und dem Getriebe des Stellantriebs einsetzbar oder eingesetzt ist. Hierbei ist es vorteilhaft, wenn entsprechende mechanische Verbindungsstellen, also beispielsweise die Verbindungstellen zwischen Bremsmodul und Getriebe beziehungsweise zwischen Elektromotor und Bremsmodul korrespondierend ausgebildet sind. Alternativ oder ergänzend kann es von Vorteil sein, wenn Kupplungen, insbesondere in einem Antriebsstrang, zwischen Bremsmodul und Getriebe beziehungsweise zwischen Elektromotor und Bremsmodul korrespondierend ausgebildet sind.

Die Ausgestaltung eines Bremsmoduls hat den Vorteil, dass damit eine modulare Zurüstbarkeit einer erfindungsgemäßen Bremsvorrichtung gegeben ist. Beispielsweise kann das Bremsmodul kompatibel mit bereits vorhandenen Stellantrieben ausgestaltet werden, was Kosten bei der Entwicklung des Gesamtsystems spart.

Ferner kann das erfindungsgemäße Bremsmodul eine elektrische Durchleitung aufweisen. Die elektrische Durchleitung kann beispielsweise so eingerichtet sein, dass eine elektrische Ansteuerung des Motors auch bei zwischen Getriebe und Elektromotor eingesetztem Bremsmodul weiterhin durch eine Steuerungseinheit möglich ist, die beispielsweise in einem Gehäuseteil des Getriebes angeordnet ist.

Hierzu kann erfindungsgemäß insbesondere vorgesehen sein, an dem Getriebe, dem Elektromotor und dem Bremsmodul jeweils zueinander korrespondierende elektrische Kontakte vorzusehen. Diese Kontakte ermöglichen bei eingesetztem Bremsmodul, bevorzugt auch bei nicht-eingesetztem Bremsmodul, eine elektrische Durchleitung von Steuerungssignalen von einer Steuerungseinheit auf der Getriebeseite zum Elektromotor.

Die erfindungsgemäße Ausgestaltung eines eine Halte- und eine Verzögerungsbremse aufweisenden Bremsmoduls, angeordnet zwischen Getriebe und Elektromotor des Stellantriebs, hat den weiteren Vorteil, dass eine explosionsgeschützte Ausgestaltung des Stellantriebs insgesamt möglich ist. Hierfür können insbesondere flammendurchschlagsichere Spalte an dem Bremsmodul, beispielsweise in Richtung des Getriebes und/oder in Richtung des Elektromotors, ausgestaltet sein.

Solche auch als "Explosionsschutzspalte" bekannten Spalte können in besonders vorteilhafterweise an Gehäuseschnittstellen ausgebildet werden. Derartige Spalte sind gemäß Normen derart ausgelegt, dass beispielsweise ein in einem Innenraum des Stellantriebs durch einen elektrischen Kurzschluss gezündetes Gas-Luft-Gemisch ein außerhalb des Stellantriebs befindliches Gas-Luft-Gemisch durch den Spalt hindurch gerade nicht entzünden kann. Somit kann ein Flammendurchschlag von innen nach außen verhindert werden, was in vielen Anwendungen aus Sicherheitsgründen erforderlich ist.

Mit Hilfe eines flammendurchschlagsicheren Spalts kann somit ein explosionsgeschützter Innenraum des Stellantriebs geschaffen werden, in dem elektrische Steuerungssignale sicher übertragen werden können. Die soeben erläuterte vorteilhafte Ausgestaltung der Erfindung sieht somit vor, dass das Bremsmodul wenigstens einen flammendurchschlagsicheren Spalt zur Schaffung eines explosionsgeschützten Innenraums des Stellantriebs aufweist. Hierbei kann insbesondere vorgesehen sein, dass innerhalb des explosionsgeschützten Innenraums eine elektrische Durchleitung ausgestaltet ist.

Stellantriebe wie eingangs beschrieben weisen häufig bereits eine elektrische Verbindung zwischen einem Steuerungsraum und dem Elektromotor, das heißt insbesondere einem Motorraum, auf, die explosionsgeschützt ausgebildet ist, wobei hierzu oftmals vergossene Kabeldurchführungen an dem Elektromotor oder dem Getriebe ausgebildet werden. Durch das Vorsehen einer elektrischen Durchleitung und eines flammendurchschlagsicheren Spalts an dem erfindungsgemäßen Bremsmodul wird es möglich, eine solche bereits vorhandene elektrische Verbindung weiterhin zu nutzen, wenn das Bremsmodul zwischen Getriebe und Elektromotor eingesetzt ist, und andererseits den Explosionsschutz beizubehalten. Dies zeigt einen weiteren Vorteil der erfindungsgemäßen Anordnung der beiden Bremsen zwischen Getriebe und Elektromotor im Gegensatz zu einer ebenfalls denkbaren Variante, welche vorsieht, die Haltevorrichtung und/oder die Verzögerungsbremse auf einer dem Elektromotor abgewandten Seite des Getriebes anzuordnen.

Gemäß einer weiteren Ausgestaltung der Erfindung ist es günstig, wenn die Verzögerungsbremse, die insbesondere als Fliehkraftbremse ausgestaltet sein kann, Bremsbacken aufweist, die auf eine, bevorzugt äußere, Gehäuseschale einwirken. Diese Gehäuseschale kann insbesondere durch ein Gehäuse des zuvor beschriebenen Bremsmoduls gegeben sein. Auf diese Weise lässt sich eine beim Abbremsen erzeugte Wärme über die Gehäuseschale gut nach außen ableiten.

Gängige Stellantriebe wie eingangs beschrieben können ein Handrad aufweisen, welches in an sich bekannter Weise mit dem Getriebe koppelbar ist, um das Stellelement im Notbetrieb manuell zu verstellen. Hierzu ist oftmals eine Kupplung vorgesehen, mit welcher der Elektromotor von dem Getriebe entkoppelbar ist, sodass dieser im Handbetrieb nicht mit bewegt werden muss. Um ein rückwärtiges Antreiben des Handrades zu verhindern, beispielsweise wenn sich das Stellelement selbsttätig verstellt, ist an dem Handrad oftmals eine Lastmomentsperre ausgebildet.

Um eine derartige Funktionalität auch bei Verwendung eines Stellantriebs gemäß Anspruch 1 zu ermöglichen, sieht eine weitere Ausgestaltung der Erfindung mindestens eine Kupplung an dem Stellantrieb, insbesondere in dem Bremsmodul, vor, mit der die Haltevorrichtung, und/oder eine Lastmomentsperre von dem Getriebe des Stellantriebs entkoppelbar ist, vorzugsweise im Handradbetrieb.

Gemäß einer weiteren Ausgestaltung der Erfindung kann vorgesehen sein, dass der Stellantrieb, insbesondere das Bremsmodul, zwei gleichartige Kupplungen aufweist. Diese Kupplungen können demnach insbesondere in einem Antriebsstrang des Stellantriebs, vorzugsweise zwischen Getriebe und Elektromotor, besonders bevorzugt innerhalb des Bremsmoduls, ausgebildet sein.

Eine erste dieser zwei Kupplungen, die bevorzugt getriebeseitig in dem Bremsmodul angeordnet ist, kann durch eine Vorrichtung, beispielsweise ein Handrad, betätigbar sein. Mit dieser Kupplung ist die Haltevorrichtung somit von dem Antriebsstrang, insbesondere dem Getriebe, entkoppelbar. Die zweite Kupplung, die bevorzugt an dem Elektromotor ausgebildet ist, ist dagegen für den Fall vorgesehen, dass der Elektromotor ohne das dazwischen geschaltete Bremsmodul direkt an dem Getriebe verwendet wird. Diese zweite Kupplung ist daher bevorzugt so ausgestaltet, dass sie ebenfalls mit der Vorrichtung betätigbar ist und zwar wenn der Motor direkt an dem Getriebe angeschlossen ist. Somit ist bei Nicht-Verwendung des erfindungsgemäßen Bremsmoduls durch diese zweite Kupplung der Elektromotor von dem Antriebsstrang, insbesondere dem Getriebe, entkoppelbar. Vorzugsweise sind die zwei gleichartigen Kupplungen so eingerichtet, dass sie jeweils manuell und/oder mittels einer Vorrichtung, wie beispielsweise einem Handrad des Stellantriebs, insbesondere manuell, betätigbar sind. Hierbei ist es besonders bevorzugt, wenn diese Vorrichtung an dem Getriebe ausgebildet ist.

Zur Lösung der Aufgabe wird ferner ein Bremsmodul vorgeschlagen, welches zwischen einem Elektromotor und einem Getriebe eines Stellantriebs eingesetzt werden kann. Mit dem Bremsmodul kann ein Drehmoment von dem Elektromotor auf das Getriebe übertragen werden, insbesondere derart, dass der Elektromotor ein Stellelement des Stellantriebs antreibt, welches mit einer Abtriebswelle gekoppelt ist. Somit kann das Bremsmodul insbesondere ein Drehmoment auf ein Getriebe eines wie weiter oben erläuterten Stellantriebs übertragen und/oder mit einem Elektromotor eines solchen Stellantriebs gekoppelt sein. Zur Lösung der Aufgabe weist das Bremsmodul erfindungsgemäß ein Gehäuse, eine Verzögerungsbremse sowie eine Haltevorrichtung auf. Die Verzögerungsbremse als auch die Haltevorrichtung sind hierbei innerhalb des Gehäuses des Bremsmoduls angeordnet. Ferner ist es zur besseren Auslegung des Bremsmoduls auf verschiedenste Anforderungen von Vorteil, wenn die Haltevorrichtung separat von der Verzögerungsbremse ausgestaltet ist und nicht etwa, wie in anderen möglichen Ausführungsformen, durch ein und dasselbe Bauteil gebildet ist.

Die Verzögerungsbremse und/oder die Haltevorrichtung des Bremsmoduls können wie zuvor mit Bezug auf den erfindungsgemäßen Stellantrieb beschrieben ausgebildet sein. Auch das Bremsmodul selbst kann wie zuvor bereits im Hinblick auf die Verwendung innerhalb eines erfindungsgemäßen Stellantriebs beschrieben ausgebildet sein.

Beispielsweise kann die Verzögerungsbremse als eine Fliehkraftbremse ausgestaltet sein und/oder die Haltevorrichtung kann als eine elektromagnetische Haltebremse ausgebildet sein.

Ferner kann die Verzögerungsbremse dazu eingerichtet sein, einig Bremskraft auf eine Eingangswelle eines Getriebes auszuüben. Dieses Getriebe kann beispielsweise das Getriebe eines wie zuvor beschriebenen erfindungsgemäßen Stellantriebs sein.

Weiter kann die Haltevorrichtung dazu eingerichtet sein, eine Haltekraft auf eine Eingangswelle eines Getriebes auszuüben. Auch hierbei kann es sich um das Getriebe eines wie zuvor beschriebenen erfindungsgemäßen Stellantriebs handeln.

Für eine modulare Weiterentwicklung von Stellantrieben ist es von großem Vorteil, wenn das Bremsmodul eine getriebeseitige Verbindungsvorrichtung aufweist, die passend zu einer Verbindungsvorrichtung eines Elektromotors ausgestaltet ist. Der Elektromotor kann insbesondere der Elektromotor eines erfindungsgemäßen Stellantriebs sein.

Weiter kann eine motorseitige Verbindungsvorrichtung des Bremsmoduls passend zu einer Verbindungsvorrichtung eines Getriebes ausgestaltet sein, wobei das Getriebe insbesondere dasjenige eines erfindungsgemäßen Stellantriebs sein kann.

Durch das Vorsehen zueinander passender Verbindungsvorrichtungen, beispielsweise als mechanische Schnittstellen, insbesondere an dem Gehäuse des Bremsmoduls auf der Seite des Getriebes bzw. des Elektromotors kann sichergestellt werden, dass das erfindungsgemäße Bremsmodul mit einem ein Getriebe sowie einen mit dem Getriebe verbindbaren Elektromotor aufweisenden Stellantrieb modular verwendet werden kann ohne Anpassungen an dem Getriebe oder dem Elektromotor vornehmen zu müssen.

Aus dem gleichen Grund ist es ferner von Vorteil, wenn das Bremsmodul zur Übertragung eines Drehmoments, beispielsweise von einem Elektromotor auf ein Getriebe, eine getriebeseitige Kupplungsvorrichtung aufweist, die passend zu einer Kupplungsvorrichtung eines Elektromotors ausgestaltet ist. Hierbei ist das Bremsmodul bevorzugt so ausgestaltet, dass der Elektromotor mit dem Bremsmodul verwendbar ist. Die getriebeseitige Kupplungsvorrichtung und eine passende Kupplungsvorrichtung des Getriebes können beispielsweise die bereits erwähnte erste Kupplung bilden.

Ist der Elektromotor mittels der Kupplungsvorrichtung beispielsweise mit dem Getriebe koppelbar, so kann durch diese Ausgestaltung das Bremsmodul folglich in besonders einfacher Weise mit dem Getriebe gekoppelt werden. Hierbei ist das Bremsmodul bevorzugt so ausgestaltet, dass das Getriebe mit dem Bremsmodul verwendbar ist.

Bei einer solchen Ausgestaltung kann zudem vorgesehen sein, dass die getriebeseitige Kupplungsvorrichtung des Bremsmoduls von außen, insbesondere manuell, von dem Getriebe entkoppelbar ist. Dadurch kann insbesondere erreicht werden, dass unter Verwendung von an dem Getriebe bereits ausgebildeter Entkopplungsvorrichtungen, beispielsweise eines Entkopplungsstifts oder dergleichen, das Bremsmodul und damit gegebenenfalls auch ein mit dem Bremsmodul verbundener Elektromotor von dem Getriebe abgekoppelt werden kann.

Um nun eine ähnlich einfache Kopplung des Bremsmoduls, insbesondere ohne jegliche Anpassungen, mit einem Elektromotor zu ermöglichen, kann das Bremsmodul eine motorseitige Kupplungsvorrichtung aufweisen, die passend zu einer Kupplungsvorrichtung eines Getriebes ausgestaltet ist. Hierbei ist das Bremsmodul bevorzugt so ausgestaltet, dass der Elektromotor mit dem Bremsmodul verwendbar ist. Die motorseitige Kupplungsvorrichtung und eine passende Kupplungsvorrichtung des Elektromotors, insbesondere die bereits erwähnte Kupplungsvorrichtung des Elektromotors, können beispielsweise die bereits erwähnte zweite Kupplung bilden.

Die getriebeseitige Kupplungsvorrichtung und die motorseitige Kupplungsvorrichtung des Bremsmoduls sind somit zueinander passend ausgebildet. Dies ermöglicht, dass zwei identische Bremsmodule an ihren jeweiligen Kupplungsvorrichtungen koppelbar sind.

Eine oder die zuvor beschriebene getriebeseitige Verbindungsvorrichtung des Bremsmoduls kann somit passend zu einer oder der zuvor beschriebenen motorseitigen Verbindungsvorrichtung des Bremsmoduls ausgestaltet sein. Ferner kann eine oder die zuvor beschriebene getriebeseitige Kupplungsvorrichtung des Bremsmoduls passend zu einer oder der zuvor beschriebenen motorseitigen Kupplungsvorrichtung des Bremsmoduls ausgestaltet sein. Durch derartige Ausgestaltungen kann erreicht werden, dass das Bremsmodul getriebeseitig und/oder motorseitig mit einer Kopie des Bremsmoduls verbindbar ist. Dadurch wird sichergestellt, dass das Bremsmodul einfach zwischen ein Getriebe und Elektromotor, beispielsweise eines Stellantriebs, einsetzbar ist, ohne dass Anpassungen am Getriebe oder am Elektromotor vorgenommen werden müssen. Schließlich kann es in einigen Anwendungen, beispielsweise beim Einsatz eines Stellantriebs auf einem Gasförderfeld, von großem Vorteil sein, wenn das Bremsmodul derart ausgebildet ist, dass in einer Einbausituation wenigstens ein flammendurchschlagsicherer Spalt zur Schaffung eines explosionsgeschützten Innenraums durch das Bremsmodul bereitgestellt wird. Die Erfindung wird nun anhand von Ausführungsbeispielen näher beschrieben, ist aber nicht auf diese Ausführungsbeispiele beschränkt.

Weitere Ausführungsbeispiele ergeben sich durch Kombination der Merkmale einzelner oder mehrerer Schutzansprüche untereinander und/oder mit einzelnen oder mehreren Merkmalen des jeweiligen Ausführungsbeispiels. Insbesondere können somit Ausbildungen der Erfindung aus der nachfolgenden Beschreibung eines bevorzugten Ausführungsbeispiels in Verbindung mit der allgemeinen Beschreibung, den Ansprüchen sowie den Zeichnungen gewonnen werden. Die Erfindung wird in den Ansprüchen definiert.

Es zeigt:
- Fig. 1: eine Querschnittsansicht eines an sich bekannten Stellantriebs mit einem Elektromotor und einem Getriebe, das eine Schneckenwelle aufweist,
- Fig. 2: eine Querschnittsansicht des Stellantriebs aus Figur 1, jedoch mit einem zwischen Motor und Getriebe eingesetzten erfindungsgemäßen Bremsmodul,
- Fig. 3: eine schematische Darstellung einer weiteren möglichen Ausgestaltung eines erfindungsgemäßen Stellantriebs mit einer Verzögerungsbremse, einer elektromagnetischen Haltebremse, sowie einem Handrad das über eine Lastmomentsperre mit dem Getriebe verbunden ist,
- Fig. 4: eine schematische Darstellung einer weiteren möglichen Ausgestaltung eines erfindungsgemäßen Stellantriebs mit einer Verzögerungsbremse und einer durch eine Kupplung und eine Lastmomentsperre gebildeten Haltevorrichtung, sowie
- Fig.5: eine schematische Darstellung einer weiteren möglichen Ausgestaltung eines erfindungsgemäßen Stellantriebs mit einer Verzögerungsbremse und einer als elektromagnetische Haltebremse ausgebildeten Haltevorrichtung.

Bei der nachfolgenden Beschreibung verschiedener Ausführungsformen der Erfindung erhalten in ihrer Funktion übereinstimmende Elemente auch bei abweichender Gestaltung oder Formgebung übereinstimmende Bezugszahlen.

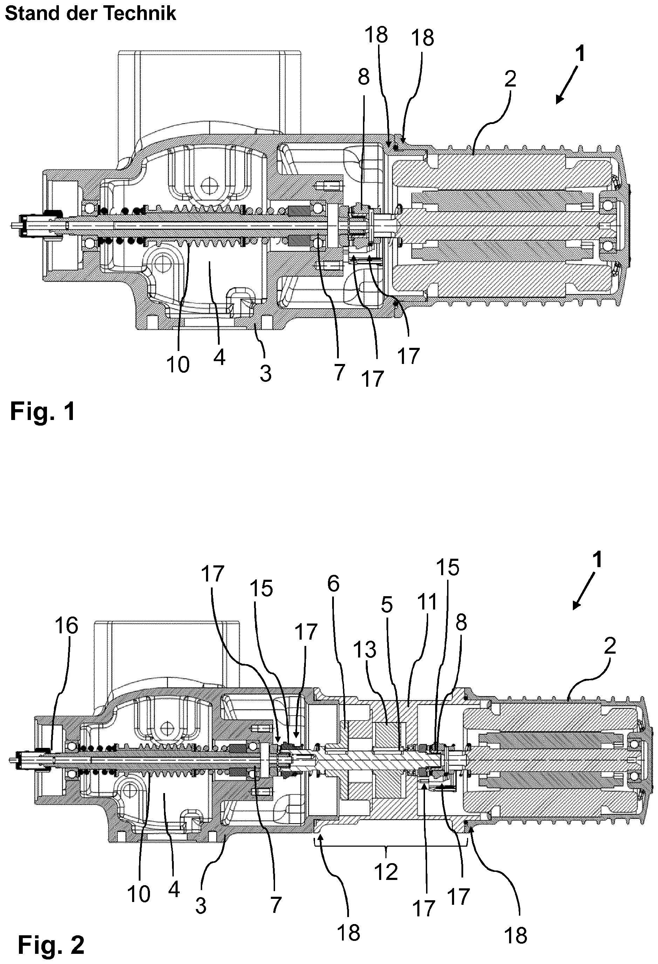

Die Figur 1 zeigt eine Querschnittsansicht eines an sich bekannten Stellantriebs 1 mit einem Elektromotor 2. Der Elektromotor 2 treibt vermittelt durch eine Kupplung 8 eine Eingangswelle 7 des Getriebes 3 an. Auf der Eingangswelle 7 ist mittig eine Hohlschnecke 10 montiert, die eine in Figur 1 nicht gezeigte Abtriebswelle 4 antreibt, wobei das Bezugszeichen 4 jedoch in etwa die Position der Abtriebswelle 4 in Figur 1 andeutet. Das Getriebe 3 ist somit gebildet durch die Eingangswelle 7, die Schneckenwelle 10, die nicht dargestellte Abtriebswelle 4 sowie weitere Elemente. Im Betrieb ist mit der nicht dargestellten Abtriebswelle 4 ein Stellelement verbunden, das von dem Stellantrieb 1 verstellt wird.

Die Figur 2 zeigt denselben Stellantrieb 1 aus Figur 1, jedoch mit einem zwischen dem Elektromotor 2 und dem Getriebe 3 eingesetzten erfindungsgemäßen Bremsmodul 12. Innerhalb des Gehäuses 11 des Bremsmoduls 12 ist eine als Fliehkraftbremse ausgestaltete Verzögerungsbremse 5 sowie eine elektromagnetische Haltebremse 6 angeordnet, wobei letztere als erfindungsgemäße Haltevorrichtung 6 dient. Mittels der Bremsbacken 13 kann die Verzögerungsbremse 5 eine Bremskraft an der Innenseite des Gehäuses 11 ausüben. Da die Verzögerungsbremse 5 fest mit einer zentral in dem Bremsmodul 12 angeordneten Welle verbunden ist und diese Welle über eine Kupplung 15 mit der Eingangswelle 7 des Getriebes 3 verbunden ist, übt die Verzögerungsbremse 5 vermittelt durch das Getriebe 3 eine Bremskraft auf das Stellelement aus.

In analoger Weise kann durch Bremsbeläge der Haltevorrichtung 6 eine Haltekraft auf das Stellelement ausgeübt werden. Auch hier verläuft der Kraftfluss ausgehend von den Bremsflächen der Haltevorrichtung 6 über eine zentrale Welle des Bremsmoduls 12, eine Kupplung 15 und die Eingangswelle 7 des Getriebes 3 in das Getriebe 3 und von dort bis zum Stellelement.

Bei dem in Figur 2 dargestellten Ausführungsbeispiel ist vorteilhaft, dass die Haltevorrichtung 6 als elektromagnetische Feststellbremse ausgebildet ist, denn dadurch kann die Haltevorrichtung 6 elektrisch betätigt werden. Gleichzeitig sind die Bremsflächen der Haltevorrichtung 6 gerade so ausgestaltet, dass die Haltevorrichtung 6 in beide mögliche Rotationsrichtungen der zentralen Welle des Bremsmoduls 12, also entgegen der beiden verschiedenen Antriebsrichtungen des Elektromotors 2, wirkt.

Bei dem in Figur 2 dargestellten Ausführungsbeispiel ist die Haltevorrichtung 6 zudem gerade so eingerichtet, dass sie im bestromten Zustand eine Haltekraft auf die Eingangswelle 7 des Getriebes 3 und damit auf das Stellelement ausübt. Hat der Elektromotor 2 somit im Betrieb eine bestimmte Position des Stellelements angefahren, so kann durch Bestromung der Haltevorrichtung 6 diese Position sicher gehalten werden, ohne dass dafür der Elektromotor 2 weiter ein Haltemoment bereitstellen muss. Dies ist insbesondere vorteilhaft, um eine Dauerbelastung des Elektromotors 2 zu vermeiden.

Durch die Kopplung der zentral innerhalb des Bremsmoduls 12 angeordneten Welle mit der Eingangswelle 7 des Getriebes 3 über die mittlere Kupplung 15 wird sichergestellt, dass sowohl die Verzögerungsbremse 5 als auch die Haltevorrichtung 6 auf die Eingangswelle 7 des Getriebes 3 einwirken können. Wie die Querschnittsansicht der Figur 2 zeigt, ist hierzu die Verzögerungsbremse 5 als auch die Haltevorrichtung 6 zwischen dem Elektromotor 2 und dem Getriebe 3 angeordnet.

Mit der in Figur 2 gezeigten Haltevorrichtung 6 wird somit eine Möglichkeit geschaffen, auch ohne Verwendung eines selbsthemmenden Getriebes 3 das Stellelement sicher in einer gewissen Position zu halten. Folglich kann bei dem in Figur 2 gezeigten Ausführungsbeispiel eine Schneckenwelle 10 verwendet werden, die im Zusammenspiel mit der nicht gezeigten Abtriebswelle 4 keine Selbsthemmung aufweist. Damit kann das Getriebe 3 mit einem optimierten Wirkungsgrad ausgelegt werden, was vorteilhaft ist, da damit beispielsweise auch der Elektromotor 2 kleiner dimensioniert werden kann.

Die Tatsache, dass das in Figur 2 dargestellte Getriebe 3 in beiden Drehrichtungen des Elektromotors 2 antreibbar ist, führt unter anderem dazu, dass eine von dem Stellelement erzeugte Gewichtskraft vermittelt durch das Getriebe 3 auf die zentrale Welle des Bremsmoduls 12 und damit sowohl auf die Haltevorrichtung 6 als auch die Verzögerungsbremse 5 wirkt. In einem unbestromten Zustand, wenn also die Haltevorrichtung 6 gerade keine Haltekraft ausübt, kann das Stellelement durch seine Gewichtskraft somit das Getriebe 3 und über die Kupplung 15 die zentrale Welle des Bremsmoduls 12 antreiben. Als Folge dreht sich somit die Verzögerungsbremse 5 mit der zentralen Welle des Bremsmoduls 12, wobei die Verzögerungsbremse 5 ab einer gewissen Drehzahl, die insbesondere doppelt so groß sein kann wie eine Nenndrehzahl des Elektromotors 2, eine Bremskraft entfaltet. Diese Bremskraft kann gerade so groß gewählt sein (beispielsweise durch geeignete Dimensionierung der Bremsbacken sowie der Federn der Verzögerungsbremse 5), dass sich das Stellelement nur mit einer begrenzten Geschwindigkeit selbsttätig verstellen kann.

Durch das Abbremsen des Stellelements mittels der Verzögerungsbremse kann somit beispielsweise ein sicherer Freifallbetrieb, wie eingangs erläutert, gewährleistet werden. Bei korrekter Dimensionierung der Bremsbacken 13 sowie der Feder der Verzögerungsbremse 5 kann insbesondere eine konstante Verstell- beziehungsweise Verfahrgeschwindigkeit des Stellelements bei einem selbsttätigen Verstellen desselben gewährleistet werden.

Wie ein Vergleich der beiden Figuren 1 und 2 zeigt, ist das Bremsmodul 12 in eine Schnittstelle des Antriebsstrangs eingesetzt, der vom Elektromotor 2 ausgehend über das Getriebe 3 bis zum Stellelement verläuft. Die mechanische Verbindungsstelle zwischen dem Elektromotor 2 und dem Getriebe 3, die in Figur 1 durch die Kupplung 8 gebildet ist, ist bei dem Bremsmodul 12 in Figur 2 korrespondierend ausgebildet: Zum einen wird die bereits am Elektromotor vorhandene Kupplung 8 weiter verwendet, indem die zentrale Welle des Bremsmoduls 12 in diese Kupplung 8 eingreift; zum anderen weist das Bremsmodul 12 selbst getriebeseitig eine korrespondierend ausgebildete Kupplung 15 auf, in welche die Eingangswelle 7 des Getriebes 3 eingreift.

Durch die Anordnung sowohl der als Fliehkraftbremse ausgestalteten Verzögerungsbremse 5 als auch der Haltevorrichtung 6 innerhalb des gemeinsamen Gehäuses 11 des Bremsmoduls 12 kann das Bremsmodul 12 als Ganzes sehr einfach modular an bereits bestehenden Stellantrieben, wie beispielhaft anhand der Figuren 1 und 2 gezeigt, nachgerüstet werden.

Anhand der Figur 2 lässt sich auch gut veranschaulichen, wie eine elektrische Durchleitung und/oder flammendurchschlagsichere Spalte an dem Bremsmodul 12 vorteilhaft genutzt werden können. So ist an dem Bremsmodul 12 eine Durchleitung vorgesehen, mit welcher Steuerungssignale, ausgehend von dem Getriebe 3, an den Elektromotor 2 übertragen werden können. Hierfür werden auf einfache Weise bereits bestehende elektrische Schnittstellen an dem Getriebe 3 beziehungsweise dem Elektromotor 2 genutzt. Mittels flammendurchschlagsicherer Spalte, die in der Nähe von Berührungsflächen zwischen dem Gehäuse 11 des Bremsmoduls 12 und dem Elektromotor 2 beziehungsweise dem Gehäuse des Getriebes 3 ausgebildet sind, kann auf einfache Weise ein vom Getriebe durch das Bremsmodul 12 bis zum Elektromotor 2 verlaufender explosionsgeschützter Innenraum geschaffen werden.

In Figur 2 ist daneben gut zu erkennen, wie die Bremsbacken 13 der Verzögerungsbremse 5 innenseitig an dem Gehäuse 11 des Bremsmoduls 12 angreifen, wobei an dieser Stelle Bremswärme entsteht, die durch das Gehäuse 11 nach außen geleitet wird.

Der in Figur 2 dargestellte Stellantrieb 1 weist insgesamt drei Kupplungen 8, 15 und 16 auf. Die Kupplung 8 dient der Entkopplung der Verzögerungsbremse 5 und der Haltevorrichtung 6 vom Getriebe; mit der Kupplung 8 könnte dagegen der Elektromotor 2 vom Bremsmodul 12 entkoppelt werden, was jedoch bei normalem Betrieb nicht notwendig ist. Die linke Kupplung 16 dient dem Einkoppeln eines nicht näher dargestellten Handrades, welches am linken Ende der Eingangswelle 7 montiert werden kann und bei in Eingriff befindlicher Kupplung 16 zum manuellen Verstellen des Stellelements genutzt werden kann. Insbesondere kann dieses Handrad mit einer Lastmomentsperre gekoppelt sein, so dass bei dem in Figur 2 dargestellten Ausführungsbeispiel die linke Kupplung 16 dazu dienen kann, diese Lastmomentsperre von dem Getriebe 3 zu entkoppeln.

Bei genauerer Betrachtung der Figur 2 fällt auf, dass der dargestellte erfindungsgemäße Stellantrieb 1 zwei gleichartige Kupplungen 8 und 15 aufweist, nämlich die Kupplung 8 zwischen dem Elektromotor 2 und dem Bremsmodul 12 und die Kupplung 15 zwischen dem Bremsmodul 12 und dem Getriebe 3. Diese beiden korrespondierenden Kupplungen 8,15 sind somit im Antriebsstrang des Stellantriebs 1 zwischen dem Getriebe 3 und dem Elektromotor 2 ausgebildet.

Wie bereits erläutert, kann in Fig.2 mittels der linken mittleren Kupplung 15 insbesondere die Haltevorrichtung 6 von dem Antriebsstrang, also insbesondere von dem links angeordneten Getriebe 3, genauer der Eingangswelle 7, entkoppelt werden. Die rechte Kupplung 8 dient dagegen dazu, den Elektromotor 2 von dem Antriebsstrang, also insbesondere von dem Getriebe 3 zu entkoppeln. Die mittlere Kupplung 15 kann zudem manuell nämlich mit dem nicht näher dargestellten Handrad über eine Druckstange betätigt werden.

In Figur 1 wird dagegen die rechte Kupplung 8, die identisch mit der Kupplung 8 in Figur 2 ist, also diejenige Kupplung, die mit der Motorwelle des Elektromotors 2 in Eingriff steht, durch die Druckstange betätigt. Diese Druckstange verläuft in Fig. 1 durch das Zentrum der Eingangswelle 7 und von der Kupplung 8 ausgehend bis zu dem Montagepunkt des Handrads am linken Ende der Eingangswelle 7.

In Figur 2 kann dagegen mit derselben Druckstange die mittlere Kupplung 15 betätigt werden, die die Eingangswelle 7 des Getriebes 3 mit der zentralen Welle des Bremsmoduls 12 verbindet. Die Vorrichtung, die die beiden Kupplungen betätigt, nämlich die zentral durch die Eingangswelle 7 verlaufende Druckstange, ist somit an dem Getriebe 3 ausgebildet beziehungsweise montiert.

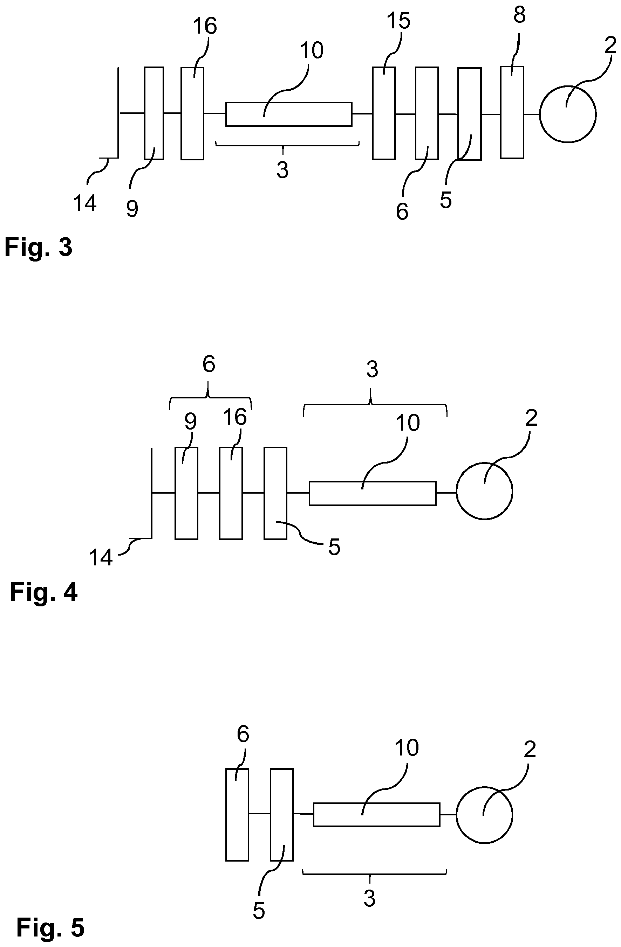

Die weiteren Figuren 3 bis 5 erläutern schematisch weitere mögliche Ausgestaltungen der Erfindung. So repräsentiert das in Figur 3 gezeigte Schema zunächst die in Figur 2 illustrierte Ausgestaltung eines Stellantriebs 1. Von rechts nach links überträgt der Elektromotor 2 über eine erste Kupplung 8 sowie eine zweite Kupplung 15 seine Antriebskraft auf die Schneckenwelle 10 des Getriebes 3. Hierbei sind die Haltevorrichtung 6 sowie die Verzögerungsbremse 5 zwischen den beiden Kupplungen 8,15 angeordnet. Zur linken Hand des Getriebes 3 findet sich eine weitere Kupplung 16 mit der ein Handrad und eine mit dem Handrad fest verbundene Lastmomentsperre 9 an das Getriebe 3 angekoppelt werden können.

Auch Figur 4 zeigt einen erfindungsgemäßen Stellantrieb, denn dieser weist sowohl eine Haltevorrichtung 6 als auch eine Verzögerungsbremse 5 auf. Im Unterschied zu dem Beispiel aus Figur 3, ist jedoch die Haltevorrichtung 6 durch die Kombination einer Kupplung 16 mit einer Lastmomentsperre 9 gebildet. Mittels der Lastmomentsperre 9 kann somit im eingekoppelten Zustand eine Haltekraft auf das Getriebe 3 und damit das Stellelement ausgeübt werden. Wird in Figur 4 dagegen die Kupplung 16 ausgekoppelt, so kann sich das Stellelement, gebremst durch die Verzögerungsbremse 5, die weiterhin mit dem Getriebe 3 verbunden bleibt, selbsttätig verstellen. Dabei treibt das Stellelement zusätzlich zur Verzögerungsbremse 5 auch den Elektromotor 2 an, der ebenfalls mit dem Getriebe 3 verbunden bleibt.

Schließlich zeigt Figur 5 eine weitere mögliche Ausgestaltung, bei der die Haltevorrichtung 6 durch eine elektromagnetische Haltebremse gebildet ist. Eine solche Bremse lässt sich elektrisch zu- oder abschalten, so dass auf eine Kupplung vollständig verzichtet werden kann. Somit kann auch bei dem in Figur 5 gezeigten Ausführungsbeispiel gewährleistet werden, dass einerseits die elektromagnetische Haltebremse das Stellelement in einer bestimmten Position festhalten kann und dass andererseits bei ausgeschalteter elektromagnetischer Haltebremse die Verzögerungsbremse 5 ein Verstellen des Stellelements, entweder selbsttätig oder angetrieben durch den Elektromotor 2, auf eine sichere Verfahrgeschwindigkeit begrenzen kann. Dies zeigt, dass die Ausgestaltung von Kupplungen für die Erfindung nicht wesentlich ist, sondern lediglich vorteilhaft sein kann.

Anhand der Figur 2 ist auch gut zu erkennen, dass das Bremsmodul 12, welches eine Verzögerungsbremse 5 und eine Haltevorrichtung 6 aufweist, die beide innerhalb eines gemeinsamen Gehäuses 11 angeordnet sind, ein Drehmoment von dem Elektromotor 2 auf das Getriebe 3 des Stellantriebs 1 überträgt. Hierzu weist das Bremsmodul 12 ein Übertragungselement in Form einer Welle auf an dessen beiden Enden jeweils eine Kupplungsvorrichtung ausgebildet ist.

Die in der Figur 2 links angeordnete getriebeseitige Kupplungsvorrichtung 17 des Bremsmodul 12 ist dabei gerade passend zu der an dem rechten Ende der Schneckenwelle 10 ausgebildeten Kupplungsvorrichtung 17 des Getriebes 3 ausgestaltet. Die in der Figur 2 rechts angeordnete motorseitige Kupplungsvorrichtung 17 des Bremsmoduls 12 ist hingegen gerade passend zu der an dem linken Ende der Motorwelle des Elektromotors 2 ausgebildeten Kupplungsvorrichtung 17 ausgestaltet.

Das Bremsmodul 12 ist mittels Gewindeschrauben sowie entsprechend an dem Gehäuse 11 ausgebildeten Befestigungsdurchführungen getriebeseitig mit dem Gehäuse des Getriebes 3 und motorseitig mit dem Gehäuse des Elektromotors 2 mechanisch verbunden. Diese getriebeseitigen bzw. motorseitigen Verbindungsvorrichtungen 18 des Bremsmoduls 12 sind dabei jeweils passend zu entsprechenden Verbindungsvorrichtungen 18 des Elektromotors 2 bzw. des Getriebes 3 ausgebildet, mit denen der Elektromotor 2 und das Getriebe 3 miteinander verbunden werden können, wie in Fig.1 illustriert.

Beispielsweise ist in Figur 2 gut zu erkennen, dass das Querschnittsprofil des Gehäuses 11 des Bremsmoduls 12 getriebeseitig analog zu dem getriebeseitigen Querschnitt des Gehäuses des Elektromotors 2 ausgebildet ist, während das Querschnittsprofil des Gehäuses 11 des Bremsmodul 12 motorseitig analog zu dem motorseitigen Querschnitt des Gehäuses des Getriebes 3 ausgebildet ist. Durch diese Ausgestaltung kann somit das Bremsmodul 12 in besonders einfacher Weise zwischen den Elektromotor 2 und das Getriebe 3 eingesetzt werden, ohne dass hierfür Anpassungen an dem Getriebe 3 oder dem Elektromotor 2 vorgenommen werden müssen. Aufgrund dieser Ausgestaltung wäre es zudem möglich, zwei identische Bremsmodule 12 hintereinander anzuordnen und miteinander zu verbinden.

Wie bereits zuvor angesprochen, bildet das Bremsmodul 12 in der in Figur 2 gezeigten Einbausituation sowohl an einer Kontaktfläche zu dem Gehäuse des Getriebes 3 als auch an einer Kontaktfläche zu dem Gehäuse des Elektromotors 2 jeweils mindestens einen flammendurchschlagsicheren Spalt aus. Dadurch wird ein explosionsgeschützter Innenraum geschaffen, der sich in Figur 2 vom Innern des Getriebes 3 durch das Bremsmodul 12 hindurch bis in den Innenraum des Elektromotors 2 erstreckt.

Zur Erhöhung der Betriebssicherheit eines Stellantriebs 1 mit einem Elektromotor 2 und einem, bevorzugt nichtselbsthemmenden, Getriebe 3 wird eine Bremsvorrichtung vorgeschlagen, die mittels einer Verzögerungsbremse 5 ein kontrolliertes, selbsttägiges Verstellen eines mit dem Stellantrieb 1 über das Getriebe 3 verbundenen Stellelements ermöglicht, wobei bevorzugt mittels einer zusätzlichen Haltevorrichtung 6 das Stellelement auch bei einem Ausfall des Elektromotors 2 in einer festen Position gehalten werden kann. Ein erfindungsgemäßer Stellantrieb 1 lässt sich beispielsweise vorteilhaft nutzen, um schwere Schütze im Falle eines Stromausfalls in einem kontrollierten Freifallbetrieb mit konstanter Fallgeschwindigkeit zu verfahren oder in einer bestimmten Position zu halten. Erfindungsgemäß können die Haltevorrichtung 6 und die Verzögerungsbremse 5 in einem gemeinsamen Gehäuse 11 zu einem Bremsmodul 12 zusammengefasst werden, dass so ausgestaltet sein kann, dass es modular mit bereits vorhandenen Stellmotoren 2 und Getrieben 3 verwendet werden kann.

### Bezugszeichenliste

- 1: Stellantrieb
- 2: Elektromotor
- 3: Getriebe
- 4: Abtriebswelle
- 5: Verzögerungsbremse
- 6: Haltevorrichtung
- 7: Eingangswelle (des Getriebes)
- 8: Kupplung (des Elektromotors)
- 9: Lastmomentsperre
- 10: Schneckenwelle
- 11: Gehäuse (von 12)
- 12: Bremsmodul
- 13: Bremsbacken
- 14: Handrad
- 15: Kupplung (des Bremsmoduls)
- 16: Kupplung (zum Einkoppeln eines Handrades)
- 17: Kupplungsvorrichtung
- 18: Verbindungsvorrichtung

## Patentansprüche

1. **Stellantrieb (1)** mit einem Elektromotor (2), welcher mittels eines Getriebes (3) eine Abtriebswelle (4) antreibt, wobei die Abtriebswelle (4) mit einem Stellelement koppelbar oder gekoppelt ist,
- wobei der Stellantrieb (1) eine Verzögerungsbremse (5) aufweist, die dazu eingerichtet ist, eine Bremskraft auf das Stellelement auszuüben,
- wobei der Stellantrieb (1) eine Haltevorrichtung (6) aufweist, die dazu eingerichtet ist, eine Haltekraft auf das Stellelement auszuüben,
- wobei die Verzögerungsbremse (5) und die Haltevorrichtung (6) als ein Bremsmodul (12) ausgebildet sind mit dem ein Drehmoment von dem Elektromotor (2) auf das Getriebe (3) übertragbar ist,
- wobei die Verzögerungsbremse (5) und die Haltevorrichtung (6) mit einem gemeinsamen Gehäuse (11) ausgebildet sind, **dadurch gekennzeichnet,**
- **dass** mechanische Verbindungsstellen zwischen dem Bremsmodul (12) und dem Getriebe (3) sowie zwischen dem Elektromotor (2) und dem Bremsmodul (12) korrespondierend ausgebildet sind, und
- **dass** das Bremsmodul (12) in eine Schnittstelle zwischen dem Elektromotor (2) und dem Getriebe (3) einsetzbar ist oder eingesetzt ist.

2. Stellantrieb (1) nach Anspruch 1, **dadurch gekennzeichnet, dass** die Verzögerungsbremse die Bremskraft vermittelt durch das Getriebe (3) ausübt und/oder dass die Haltevorrichtung (6) die Haltekraft vermittelt durch das Getriebe (3) ausübt und/oder dass die Verzögerungsbremse (5) als eine Fliehkraftbremse ausgestaltet ist.

3. Stellantrieb (1) nach Anspruch 1 oder 2, **dadurch gekennzeichnet, dass** die Haltevorrichtung (6) elektrisch betätigbar ist und/oder dass die Haltevorrichtung (6) zwei verschiedenen Antriebsrichtungen entgegenwirkt und/oder dass die Haltevorrichtung (6) die Haltekraft im bestromten Zustand ausübt.

4. Stellantrieb (1) nach einem der vorhergehenden Ansprüche, **dadurch gekennzeichnet, dass** die Verzögerungsbremse (5) und/oder die Haltevorrichtung (6) zur Einwirkung auf eine Eingangswelle (7) des Getriebes (3) eingerichtet ist/sind, vorzugsweise wobei die Verzögerungsbremse (5) und/oder die Haltevorrichtung (6) zwischen Elektromotor (2) und Getriebe (3) angeordnet ist/sind.

5. Stellantrieb (1) nach einem der vorhergehenden Ansprüche, **dadurch gekennzeichnet, dass** das Getriebe (3) in zwei entgegengesetzte Richtungen antreibbar ist.

6. Stellantrieb (1) nach einem der vorhergehenden Ansprüche, **dadurch gekennzeichnet, dass** die Haltevorrichtung (6) als elektromagnetische Haltebremse ausgebildet ist oder dass die Haltevorrichtung (6) eine, vorzugsweise elektrisch betätigbare, Kupplung (8, 15, 16) und eine Lastmomentsperre (9) aufweist.

7. Stellantrieb (1) nach einem der vorhergehenden Ansprüche, **dadurch gekennzeichnet, dass** die Verzögerungsbremse (5) als Fliehkraftbremse ausgestaltet ist und vorzugsweise so eingerichtet ist, dass eine Bremswirkung erst oberhalb der anderthalbfachen, bevorzugt oberhalb der doppelten, Nenndrehzahl des Elektromotors (2) erreicht wird und/oder dass im Falle eines selbsttätigen Verstellens des Stellelements eine konstante Verstellgeschwindigkeit mittels der Fliehkraftbremse (5) gewährleistbar ist.

8. Stellantrieb (1) nach einem der vorhergehenden Ansprüche, **dadurch gekennzeichnet, dass** Kupplungen zwischen Bremsmodul (12) und Getriebe (3) beziehungsweise zwischen Elektromotor (2) und Bremsmodul (12) korrespondierend ausgebildet sind.

9. Stellantrieb (1) nach Anspruch 8, **dadurch gekennzeichnet, dass** das Bremsmodul (12) eine elektrische Durchleitung und/oder wenigstens einen flammendurchschlagsicheren Spalt zur Schaffung eines explosionsgeschützten Innenraums des Stellantriebs (1) aufweist.

10. Stellantrieb (1) nach einem der vorhergehenden Ansprüche, **dadurch gekennzeichnet, dass** die Verzögerungsbremse (5), insbesondere die Fliehkraftbremse (5), Bremsbacken (13) aufweist, die auf eine, bevorzugt äußere, Gehäuseschale (11), insbesondere des Bremsmoduls (12), einwirken.

11. Stellantrieb (1) nach einem der vorhergehenden Ansprüche, **dadurch gekennzeichnet, dass** der Stellantrieb (1) eine Kupplung (8) aufweist, mit der die Haltevorrichtung (6) und/oder eine Lastmomentsperre, von dem Getriebe (3) des Stellantriebs (1) entkoppelbar ist, vorzugsweise im Handradbetrieb.

12. Stellantrieb (1) nach einem der vorhergehenden Ansprüche, **dadurch gekennzeichnet, dass** der Stellantrieb (1) zwei gleichartige Kupplungen (8, 15) aufweist, die in einem Antriebsstrang des Stellantriebs (1), vorzugsweise zwischen Getriebe (3) und Elektromotor (2), ausgebildet sind, insbesondere wobei mittels einer ersten der zwei gleichartigen Kupplungen (15) die Haltevorrichtung (6) von dem Antriebsstrang, insbesondere dem Getriebe (3), entkoppelbar ist und/oder wobei mittels einer zweiten der zwei gleichartigen Kupplungen (8) der Elektromotor (2) von dem Antriebsstrang, insbesondere dem Getriebe (3), entkoppelbar ist, vorzugsweise wobei die zwei gleichartigen Kupplungen (8, 15) jeweils manuell und/oder mittels einer Vorrichtung betätigbar sind, besonders bevorzugt wobei diese Vorrichtung an dem Getriebe (3) ausgebildet ist.

13. **Bremsmodul (12),** das zur Übertragung eines Drehmoments von einem Elektromotor (2) auf ein Getriebe (3) eingerichtet ist, umfassend
- ein Gehäuse (11) sowie
- eine Verzögerungsbremse (5) und
- eine separat von der Verzögerungsbremse (5) ausgestaltete Haltevorrichtung (6), die innerhalb des Gehäuses (11) angeordnet sind, **dadurch gekennzeichnet,**
- **dass** eine getriebeseitige Verbindungsvorrichtung (18) des Bremsmoduls (12) passend zu einer motorseitigen Verbindungsvorrichtung (18) des Bremsmoduls (12) ausgebildet ist,
- sodass das Bremsmodul (12) in eine Schnittstelle zwischen dem Elektromotor (2) und dem Getriebe (3) einsetzbar ist,
- insbesondere wobei die Verzögerungsbremse (5) als eine Fliehkraftbremse ausgestaltet ist und
- insbesondere wobei die Haltevorrichtung (6) als eine elektromagnetische Haltebremse ausgebildet ist.

14. Bremsmodul (12) gemäß Anspruch 13, wobei die Verzögerungsbremse (5) dazu eingerichtet ist, eine Bremskraft auf eine Eingangswelle (7) eines, insbesondere des, Getriebes (3) auszuüben und/oder wobei die Haltevorrichtung (6) dazu eingerichtet ist, eine Haltekraft auf eine Eingangswelle (7) eines, insbesondere des, Getriebes (3) auszuüben.

15. Bremsmodul (12) gemäß Anspruch 13 oder 14, wobei eine getriebeseitige Verbindungsvorrichtung (18) des Bremsmoduls (12) passend zu einer Verbindungsvorrichtung (18) eines, insbesondere des, Elektromotors (2) ausgestaltet ist und/oder wobei eine motorseitige Verbindungsvorrichtung (18) des Bremsmoduls (12) passend zu einer Verbindungsvorrichtung (18) eines, insbesondere des, Getriebes (3) ausgestaltet ist und/oder wobei eine getriebeseitige Kupplungsvorrichtung (17) des Bremsmoduls (12) zur Übertragung eines Drehmoments passend zu einer Kupplungsvorrichtung (17) eines, insbesondere des, Elektromotors (2) ausgestaltet ist, vorzugsweise wobei die getriebeseitige Kupplungsvorrichtung (17) des Bremsmoduls (12) von außen, insbesondere manuell, von einem, insbesondere dem, Getriebe (3) entkoppelbar ist, und/oder wobei eine motorseitige Kupplungsvorrichtung (17) des Bremsmoduls (12) zur Übertragung eines Drehmoments passend zu einer Kupplungsvorrichtung (17) eines, insbesondere des, Getriebes (3) ausgestaltet ist und/oder dass das Bremsmodul (12) derart ausgebildet ist, dass in einer Einbausituation wenigstens ein flammendurchschlagsicherer Spalt zur Schaffung eines explosionsgeschützten Innenraums durch das Bremsmodul (12) bereitgestellt wird.

16. Bremsmodul (12) gemäß einem der Ansprüche 13 bis 15, wobei eine oder die getriebeseitige Kupplungsvorrichtung (17) des Bremsmoduls (12) passend zu einer oder der motorseitigen Kupplungsvorrichtung (17) des Bremsmoduls (12) ausgebildet ist, insbesondere derart, dass das Bremsmodul (12) getriebeseitig und/oder motorseitig mit einer Kopie des Bremsmoduls (12) verbindbar ist.

## Claims

1. **Actuator (1)** having an electric motor (2), which drives an output shaft (4) by means of a transmission (3), wherein the output shaft (4) is coupled or able to be coupled to an actuating element,
- wherein the actuator (1) has a retarding brake (5), which is designed to exert a braking force on the actuating element,
- wherein the actuator (1) has a holding device (6), which is designed to exert a holding force on the actuating element,
- wherein the retarding brake (5) and the holding device (6) are in the form of a braking module (12), by means of which a torque can be transmitted from the electric motor (2) to the transmission (3),
- wherein the retarding brake (5) and the holding device (6) are formed with a common housing (11), **characterized**
- **in that** mechanical connecting points between the braking module (12) and the transmission (3) and between the electric motor (2) and the braking module (12) are configured in a corresponding manner, and
- **in that** the braking module (12) is inserted or able to be inserted between the electric motor (2) and the transmission (3).

2. Actuator (1) according to Claim 1, **characterized in that** the retarding brake exerts the braking force in a manner transmitted by the transmission (3), and/or **in that** the holding device (6) exerts the holding force in a manner transmitted by the transmission (3), and/or **in that** the retarding brake (5) is configured as a centrifugal brake.

3. Actuator (1) according to Claim 1 or 2, **characterized in that** the holding device (6) is electrically actuatable, and/or **in that** the holding device (6) counteracts two different drive directions, and/or **in that** the holding device (6) exerts the holding force in the energized state.

4. Actuator (1) according to one of the preceding claims, **characterized in that** the retarding brake (5) and/or the holding device (6) is/are designed to act on an input shaft (7) of the transmission (3), preferably wherein the retarding brake (5) and/or the holding device (6) is/are arranged between the electric motor (2) and the transmission (3).

5. Actuator (1) according to one of the preceding claims, **characterized in that** the transmission (3) is drivable in two opposite directions.

6. Actuator (1) according to one of the preceding claims, **characterized in that** the holding device (6) is in the form of an electromagnetic holding brake, or **in that** the holding device (6) has a, preferably electrically actuatable, clutch (8, 15, 16) and an anti-backdrive device (9).

7. Actuator (1) according to one of the preceding claims, **characterized in that** the retarding brake (5) is configured as a centrifugal brake and is preferably designed such that a braking effect is achieved only above one and a half times, preferably above twice, the nominal speed of the electric motor (2), and/or **in that**, in the case of automatic adjustment of the actuating element, a constant adjustment speed is able to be ensured by means of the centrifugal brake (5).

8. Actuator (1) according to one of the preceding claims, **characterized in that** clutches between the braking module (12) and the transmission (3) and between the electric motor (2) and the braking module (12), respectively, are configured in a corresponding manner.

9. Actuator (1) according to Claim 8, **characterized in that** the braking module (12) has an electrical feedthrough and/or at least one flame-arresting gap for creating an explosion-proof interior of the actuator (1) .

10. Actuator (1) according to one of the preceding claims, **characterized in that** the retarding brake (5), in particular the centrifugal brake (5), has brake shoes (13), which act on a, preferably outer, housing shell (11), in particular of the braking module (12).

11. Actuator (1) according to one of the preceding claims, **characterized in that** the actuator (1) has a clutch (8), with which the holding device (6) and/or an anti-backdrive device is able to be uncoupled from the transmission (3) of the actuator (1), preferably in handwheel operation.

12. Actuator (1) according to one of the preceding claims, **characterized in that** the actuator (1) has two clutches (8, 15) of the same type, which are formed in a drive train of the actuator (1), preferably between the transmission (3) and the electric motor (2), in particular wherein, by means of a first one of the two clutches (15) of the same type, the holding device (6) is able to be uncoupled from the drive train, in particular the transmission (3), and/or wherein, by means of a second one of the two clutches (8) of the same type, the electric motor (2) is able to be uncoupled from the drive train, in particular the transmission (3), preferably wherein the two clutches (8, 15) of the same type are each actuatable manually and/or by means of a device, particularly preferably wherein this device is formed at the transmission (3).

13. **Braking module (12)** configured to transmit a torque from an electric motor (2) to a transmission (3), comprising
- a housing (11) and
- a retarding brake (5) and
- a holding device (6), configured separately from the retarding brake (5), which are arranged within the housing (11), **characterized in that**
- a transmission-side connecting device (18) of the braking module (12) is configured to match a motor-side connecting device (18) of the braking module (12),
- with the result that the braking module (12) is able to be inserted into an interface between the electric motor (2) and the transmission (3),
- in particular wherein the retarding brake (5) is configured as a centrifugal brake and
- in particular wherein the holding device (6) is in the form of an electromagnetic holding brake.

14. Braking module (12) according to Claim 13, wherein the retarding brake (5) is designed to exert a braking force on an input shaft (7) of a, in particular the, transmission (3), and/or wherein the holding device (6) is designed to exert a holding force on an input shaft (7) of a, in particular the, transmission (3).

15. Braking module (12) according to Claim 13 or 14, wherein a transmission-side connecting device (18) of the braking module (12) is configured to match a connecting device (18) of an, in particular the, electric motor (2), and/or wherein a motor-side connecting device (18) of the braking module (12) is configured to match a connecting device (18) of a, in particular the, transmission (3), and/or wherein a transmission-side clutch device (17) of the braking module (12) for transmitting a torque is configured to match a clutch device (17) of an, in particular the, electric motor (2), preferably wherein the transmission-side clutch device (17) of the braking module (12) is able to be uncoupled from the outside, in particular manually, from a, in particular the, transmission (3), and/or wherein a motor-side clutch device (17) of the braking module (12) for transmitting a torque is configured to match a clutch device (17) of a, in particular the, transmission (3), and/or in that the braking module (12) is configured such that, in an installation situation, at least one flame-arresting gap for creating an explosion-proof interior is provided by the braking module (12).

16. Braking module (12) according to one of Claims 13 to 15, wherein a or the transmission-side clutch device (17) of the braking module (12) is configured to match a or the motor-side clutch device (17) of the braking module (12), in particular such that the braking module (12) is able to be connected on the transmission side and/or motor side to a copy of the braking module (12).

## Revendications

1. **Actionneur** (1) pourvu d'un moteur électrique (2) qui entraîne au moyen d'une transmission (3) un arbre de sortie (4), l'arbre de sortie (4) pouvant être accouplé ou étant accouplé avec un élément d'actionnement,
- lequel actionneur (1) comporte un frein de ralentissement (5) qui est adapté pour exercer une force de freinage sur l'élément d'actionnement,
- lequel actionneur (1) comporte un dispositif de maintien (6) qui est adapté pour exercer une force de maintien sur l'élément d'actionnement,
- le frein de ralentissement (5) et le dispositif de maintien (6) étant configurés comme un module de freinage (12) avec lequel un couple de torsion peut être transmis du moteur électrique (2) à la transmission (3) et
- le frein de ralentissement (5) et le dispositif de maintien (6) étant configurés avec un boîtier commun (11), **caractérisé en ce que**
- des organes de liaison mécaniques sont configurés entre le module de freinage (12) et la transmission (3) ainsi que, de manière correspondante, entre le moteur électrique (2) et le module de freinage (12) et que
- le module de freinage (12) est inséré ou peut être inséré dans une interface entre le moteur électrique (2) et la transmission (3).

2. Actionneur (1) selon la revendication 1, **caractérisé en ce que** le frein de ralentissement exerce la force de freinage par l'intermédiaire de la transmission (3) et/ou que le dispositif de maintien (6) exerce la force de maintien par l'intermédiaire de la transmission (3) et/ou que le frein de ralentissement (5) est configuré comme un frein centrifuge.

3. Actionneur (1) selon la revendication 1 ou 2, **caractérisé en ce que** le dispositif de maintien (6) peut être activé électriquement et/ou que le dispositif de maintien (6) contrecarre deux directions d'entraînement différentes et/ou que le dispositif de maintien (6) exerce la force de maintien à l'état sous tension.

4. Actionneur (1) selon une des revendications précédentes, **caractérisé en ce que** le frein de ralentissement (5) et le dispositif de maintien (6) sont adaptés pour agir sur un arbre d'entrée (7) de la transmission (3), de préférence le frein de ralentissement (5) et/ou le dispositif de maintien (6) étant disposés entre le moteur électrique (2) et la transmission (3).

5. Actionneur (1) selon une des revendications précédentes, **caractérisé en ce que** la transmission (3) peut être entraînée dans deux directions opposées.

6. Actionneur (1) selon une des revendications précédentes, **caractérisé en ce que** le dispositif de maintien (6) est configuré comme un frein de maintien électromagnétique ou que le dispositif de maintien (6) comporte un dispositif de couplage (8, 15, 16) de préférence à activation électrique et un dispositif d'arrêt de couple résistant (9).

7. Actionneur (1) selon une des revendications précédentes, **caractérisé en ce que** le frein de ralentissement (5) est configuré comme un frein centrifuge et est de préférence conçu de sorte qu'un effet de freinage n'est généré que lorsque le moteur électrique (2) atteint un régime supérieur à une fois et demie, de préférence à deux fois son régime nominal et/ou qu'en cas de réglage automatique de l'élément d'actionnement, une vitesse de réglage constante peut être garantie au moyen du frein centrifuge (5).

8. Actionneur (1) selon une des revendications précédentes, **caractérisé en ce que** des dispositifs de couplage sont configurés entre le module de freinage (12) et la transmission (3) ou de façon correspondante entre le moteur électrique (2) et le module de freinage (12).

9. Actionneur (1) selon une des revendications précédentes, **caractérisé en ce que** le module de freinage (12) comporte une transmission électrique et/ou au moins une fente protégée contre les retours de flamme pour doter l'actionneur (1) d'un espace intérieur protégé contre les explosions.

10. Actionneur (1) selon une des revendications précédentes, **caractérisé en ce que** le frein de ralentissement (5), en particulier le frein centrifuge, comporte des plaquettes de frein (13) qui agissent sur une coque de boîtier (11), de préférence extérieure, en particulier du module de freinage.

11. Actionneur (1) selon une des revendications précédentes, **caractérisé en ce que** cet actionneur (1) comporte un dispositif de couplage (8) avec lequel le dispositif de maintien (6) et/ou un dispositif d'arrêt de couple peuvent être découplés de la transmission (3) de l'actionneur, de préférence en mode de fonctionnement volant.

12. Actionneur (1) selon une des revendications précédentes, **caractérisé en ce que** cet actionneur (1) comporte deux dispositifs de couplage similaires (8, 15) qui sont agencés dans une chaîne cinématique de l'actionneur, de préférence entre la transmission (3) et le moteur électrique (2), en particulier dans lequel, le dispositif de maintien (6) peut être découplé de la chaîne cinématique, en particulier de la transmission (3), au moyen d'un premier des deux dispositifs de couplage similaires (15) et/ou dans lequel le moteur électrique (2) peut être découplé de la chaîne cinématique, en particulier de la transmission (3), au moyen d'un deuxième des deux dispositifs de couplage similaires (8), de préférence dans lequel les deux dispositifs de couplage similaires (8, 15) peuvent être actionnés chacun manuellement et/ou au moyen d'un dispositif, et de façon particulièrement préférée dans lequel ces dispositifs sont agencés sur la transmission (3).

13. **Module de freinage (12)** qui est adapté pour transmettre un couple de torsion d'un moteur électrique (2) à une transmission (3), comprenant
- un boîtier (11), ainsi
- qu'un frein de ralentissement (5) et
- un dispositif de maintien (6) configuré séparément du frein de ralentissement (5) qui sont agencés à l'intérieur du boîtier (11), **caractérisé en ce**
- **qu'**un dispositif de liaison (18) du module de freinage (12) situé du côté de la transmission est configuré pour s'adapter à un dispositif de liaison (18) du module de freinage situé du côté du moteur,
- de sorte que le module de freinage (12) peut être inséré dans une interface entre le moteur électrique (2) et la transmission (3),
- en particulier dans lequel le frein de ralentissement (5) est configuré comme un frein centrifuge et
- en particulier dans lequel le dispositif de maintien (6) est configuré comme un frein de maintien électromagnétique.

14. Module de freinage (12) selon la revendication 13, dans lequel le frein de ralentissement (5) est adapté pour exercer une force de freinage sur un arbre d'entrée (7) d'une, en particulier de la transmission (3) et/ou dans lequel le dispositif de maintien (6) est adapté pour exercer une force de maintien sur un arbre d'entrée (7) d'une, en particulier de la transmission (3).

15. Module de freinage (12) selon la revendication 13 ou 14, dans lequel un dispositif de liaison (18) du module de freinage (12) situé du côté de la transmission est configuré pour s'adapter à un dispositif de liaison (18) d'un, en particulier du moteur électrique (2) et/ou dans lequel un dispositif de liaison (18) du module de freinage (12) situé du côté du moteur est configuré pour s'adapter à un dispositif de liaison (18) d'une, en particulier de la transmission (3) et/ou dans lequel un dispositif de couplage (17) du module de freinage (12) situé du côté de la transmission est configuré pour transmettre un couple de torsion de façon appropriée à un dispositif de couplage (17) d'un, en particulier du moteur électrique (2), de préférence le dispositif de couplage (17) du module de freinage (12) pouvant être découplé de l'extérieur, en particulier manuellement, d'une, en particulier de la transmission (3), et/ou dans lequel un dispositif de couplage (17) du module de freinage (12) situé du côté du moteur est configuré pour transmettre un couple de torsion de façon appropriée à un dispositif de couplage (17) d'un, en particulier de la transmission (3) et/ou le module de freinage (12) est configuré de sorte que, dans une situation d'installation, au moins une fente protégée contre les retours de flamme est offerte par le module de freinage (12) pour créer un espace intérieur protégé contre les explosions.

16. Module de freinage (12) selon une des revendications 13 à 15, dans lequel un ou le dispositif de couplage (17) du module de freinage (12) situé du côté de la transmission est configuré pour s'adapter à un ou au dispositif de couplage (17) du module de freinage (12) situé du côte du moteur, en particulier de sorte que le module de freinage (12) peut être relié du côté de la transmission et/ou du côté du moteur à une copie du module de freinage (2).
